Europäisches Patentamt

European Patent Office

Office européen des brevets

(19)

(11) **EP 0 889 572 A2**

(12) **EUROPÄISCHE PATENTANMELDUNG**

(43) Veröffentlichungstag:
07.01.1999 Patentblatt 1999/01

(51) Int. Cl.⁶: **H02K 1/20**, H02K 9/00,
H02K 3/22, H02K 3/24

(21) Anmeldenummer: 98119580.3

(22) Anmeldetag: 13.04.1996

(84) Benannte Vertragsstaaten:
**DE FR GB IT**

(30) Priorität: **20.04.1995 DE 19514592**

(62) Dokumentnummer(n) der früheren Anmeldung(en)
nach Art. 76 EPÜ:
**96105842.7 / 0 739 076**

(71) Anmelder: **ABB PATENT GmbH**
**68309 Mannheim (DE)**

(72) Erfinder: **Söhner, Walter**
**76148 Karlsruhe (DE)**

(74) Vertreter: **Miller, Toivo et al**
**ABB Patent GmbH**
**Postfach 10 03 51**
**68128 Mannheim (DE)**

Bemerkungen:
This application was filed on 16 - 10 - 1998 as a
divisional application to the application mentioned
under INID code 62.

(54) **Elektrische Maschine**

(57) Die Erfindung betrifft eine elektrische Maschine (10) mit einem Gehäuse (11), mit einem Stator (12) und einem Rotor (14), mit einer Statorwicklung und mit einer Rotorwicklung, die jeweils aus Leiterstäben (30) gebildet sind, mit einem zwischen dem Stator (12) und dem Rotor (14) befindlichen Ringspalt (24), welcher Stator (12) aus Blechpaketen mit an seiner dem Ringspalt (24) zugewandten Oberfläche eingeformten Statornuten für jeweils wenigstens einen der Statorwicklung zugehörigen Leiterstab (30) und mit radial angeordneten Zwischenräumen gebildet ist, die für die Statorwicklung als Kühlkanäle dienen und von denen jeweils eine Anzahl in axialer Richtung zu Kühlkammern zusammengefaßt sind, durch welche ein Kühlgas, vorzugsweise Luft, aus einer Zuströmkammer (28) zum Ringspalt (24) und umgekehrt von dem Ringspalt (24) zu einer Abströmkammer (29) hindurchströmt, welche Zuströmkammer (28) und Abströmkammer (29), die strömungsmäßig durch Zwischenwände gegeneinander abgegrenzt und axial alternierend am Umfang des Stators angeordnet sind. Es wird vorgeschlagen, daß in an sich bekannter Weise die der Rotorwicklung zugehörigen Leiterstäbe (30), die in am Umfang des Rotors (14) eingeformte Längsnuten (26) eingelegt sind, als Hohlleiter ausgebildet sind, die durch ein von den Stirnseiten (32) des Rotor (14) zuströmendes Kühlgas, vorzugsweise Luft, beaufschlagt sind, daß die Leiterstäbe (30) zumindest auf einer ihrer beiden Radialflächen mit radialen Ausnehmungen (34, 38) versehen sind, durch welche das den Hohlleitern (30) zugeführte Kühlgas in radialer Richtung hindurchtritt, daß jeweils radial innenliegend, unterhalb jeder zur Aufnahme der Leiterstäbe (30) vorgesehenen Längsnut (26) eine Subnut (36) zusätzlich vorgesehen ist, durch welche zusätzliches Kühlgas zur Kühlung der Rotorleiterstäbe (30) zuführbar ist, daß die Länge der Subnuten (36) jeweils höchstens ein Drittel der Rotorlänge beträgt und daß am Ende jeder Subnut (36) das zugeführte Kühlgas radial nach außen zu den zugeordneten Leiterstäben (30) abströmt und deren Wärme aufnimmt.

Fig. 4

**Beschreibung**

Die Erfindung betrifft eine elektrische Maschine mit einem Gehäuse, mit einem Stator und einem Rotor, mit einer Statorwicklung und mit einer Rotorwicklung, die jeweils aus Leiterstäben gebildet sind, mit einem zwischen dem Stator und dem Rotor befindlichen Ringspalt, welcher Stator aus Blechpaketen mit an seiner dem Ringspalt zugewandten Oberfläche eingeformten Statornuten für jeweils wenigstens einen der Statorwicklung zugehörigen Leiterstab und mit radial angeordneten Zwischenräumen gebildet ist, die für die Statorwicklung als Kühlkanäle dienen und von denen jeweils eine Anzahl in axialer Richtung zu Kühlkammern zusammengefaßt sind, durch welche ein Kühlgas, vorzugsweise Luft, aus einer Zuströmkammer zum Ringspalt und umgekehrt von dem Ringspalt zu einer Abströmkammer hindurchströmt, welche Zuströmkammer und Abströmkammer, die strömungsmäßig durch Zwischenwände gegeneinander abgegrenzt und axial alternierend am Umfang des Stators angeordnet sind.

Es ist allgemein bekannt, daß beim Betrieb von elektrischen Maschinen, wie zum Beispiel Generatoren, die thermische Beanspruchung der Wicklungsisolation, insbesondere aber die beim Betrieb auftretenden Temperaturen an Heißpunkten sich nachteilig auf das Betriebsverhalten auswirken. Daher besteht seitens der Hersteller derartiger Maschinen wie auch seitens deren Betreiber ein großes Interesse, die Maschinen mit einer ausreichenden Kühlung zu versehen und so einen möglichst störungsfreien Betrieb der Maschine zu gewährleisten.

Da bekanntlich die Ausnutzung der Maschine durch die zulässige Temperatur der Heißpunkte begrenzt ist, ist es Aufgabe der Erfindung, eine möglichst intensive und gleichmäßige Kühlung der elektrischen Maschine über deren gesamte Länge zu erreichen, wobei im Falle des Versagens eines Kühlers eine möglichst kleine Leistungsreduktion notwendig sein sollte.

Diese Aufgabe wird in Verbindung mit den Merkmalen des Oberbegriffes des Anspruchs 1 erfindungsgemäß dadurch gelöst, daß in an sich bekannter Weise die der Rotorwicklung zugehörigen Leiterstäbe, die in am Umfang des Rotors eingeformte Längsnuten eingelegt sind, als Hohlleiter ausgebildet sind, die durch ein von den Rotorstirnseiten zuströmendes Kühlgas, vorzugsweise Luft, beaufschlagt sind, daß jeweils radial innenliegend, unterhalb jeder zur Aufnahme der Leiterstäbe vorgesehenen Längsnut eine Subnut zusätzlich vorgesehen ist, durch welche zusätzliches Kühlgas zur Kühlung der Rotorwicklung zuführbar ist, daß die Länge der Subnuten ausgehend von den Stirnseiten jeweils etwa ein Drittel der Rotorlänge beträgt und daß am Ende jeder Subnut das zugeführte Kühlgas radial nach außen zu den zugeordneten Leiterstäben abströmt und deren Wärme aufnimmt.

Dabei erweist es sich als vorteilhaft, daß die von den Rotorstirnseiten mit Kühlgas beaufschlagten Hohlräume der als Hohlleiter ausgebildeten Leiterstäbe im Bereich des Nutendes jeder Subnut eine Strömungssperre für das den Hohlleitern zugeführte Kühlgas aufweisen und daß die an die Strömungssperre angrenzenden Hohlräume der Hohlleiter von dem durch die Subnuten zugeführten Kühlgas durchströmt sind.

Eine bevorzugte Ausgestaltung der Erfindung ist dadurch gekennzeichnet, daß die als Hohlleiter ausgebildeten Leiterstäbe des Rotors zumindest auf einer ihrer beiden Radialflächen mit radialen Ausnehmungen versehen sind. Hierbei und im folgenden wird im Zusammenhang mit den Leiterstäben unter Radialfläche diejenige Außenfläche eines Leiterstabes verstanden, deren Erstreckungsebene senkrecht zum Radius des Rotors verläuft.

Durch die Wahl der Anzahl von Ausnehmungen, deren einzelne Querschnittsflächen und durch die Lage der Ausnehmungen in axialer Richtung werden die Strömungsverhältnisse in den Hohlleitern eingestellt. Dabei kann davon Gebrauch gemacht werden, daß der sich drehende Rotor in den radialen Ausnehmungen in den Leiterstäben ein Druckgefälle von innen nach außen erzeugt und hierdurch einen Kamineffekt hervorruft, der die Förderung des die Leiterstäbe durchströmenden Volumenstroms an Kühlgas unterstützt.

Das von einem Kamin erzeugte Druckgefälle ist

$$p = 1/2 \cdot \rho \cdot \Omega^2 \cdot (R_R^2 - R_S^2)$$

mit

$\rho$ als Massendichte des Kühlgases
$\Omega$ der mechanischen Winkelgeschwindigkeit des Rotors
$R_R$ dem Radius der Rotoroberfläche (Kaminauslaß)
$R_S$ dem Radius des Grundes der Subnut (Kamineinlaß)

Das Druckgefälle ist von der Form des Kamins unabhängig. Insbesondere kann der Kamin in radialer Richtung angeordnet, schräg oder getreppt sein.

Dabei kann es sich in bestimmten Fällen als günstig erweisen, daß die radialen Ausnehmungen den gesamten Leiterstab jeweils radial durchgreifen; andererseits kann es aber auch vorteilhaft sein, daß die radialen Ausnehmungen jeweils nur eine Außenwand des Leiterstabes durchgreifen und zueinander axial versetzt sind, da hierdurch ein intensiverer Kontakt der Kühlluft mit den Wärme abgebenden Leiteroberflächen verbunden mit einem intensiveren Wärmeaustausch gewährleistet ist. Außerdem ist hierbei der örtliche Verlust an Kupferquerschnitt nur halb so groß gegenüber der Ausführung mit radial durchgreifenden Ausnehmungen.

In weiterer Ausgestaltung der Erfindung ist vorgesehen, daß das aus dem Rotor austretende erwärmte Kühlgas über den Ringspalt und über die an die Abströmkammer angeschlossenen Kühlkanäle des Stators abströmt.

Gemäß einer alternativen Ausgestaltung der Erfindung kann vorgesehen sein, daß der Rotor anstelle von Subnuten eine Zentralbohrung aufweist, durch welche Kühlgas zuführbar ist, das über entsprechende Radialbohrungen den Leiterstäben zuströmt und diese kühlt. Hierbei kann der vorher erwähnte Kamineffekt besonders vorteilhaft genutzt werden, weil das Druckgefälle bei gegebenem Rotordurchmesser um so stärker wird, je länger die den Kamin bildende radiale Strömungsstrecke ist. Bei einer Zentralbohrung ist der Radius des Kamineinlasses Null.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Weiterbildungen und Verbesserungen der Erfindung sowie besondere Vorteile der Erfindung näher erläutert und beschrieben werden.

Es zeigen:

Fig. 1    eine Maschine mit Stator und Rotor ohne Gehäuse im Teilschnitt in Schrägansicht,

Fig. 2    einen Querschnitt durch die Maschine gemäß Fig. 1,

Fig. 3    einen Rotor gemäß der Erfindung in Schrägansicht,

Fig. 4    einen schematischen Längsschnitt durch den Rotor gemäß Fig. 3,

Fig. 5    einen Längsschnitt durch eine Maschine.

Bei den folgenden Figuren werden für gleiche Merkmale jeweils die identischen Bezugsziffern verwendet, so daß diesbezügliche Erläuterungen nur noch bedarfsweise gegeben werden.

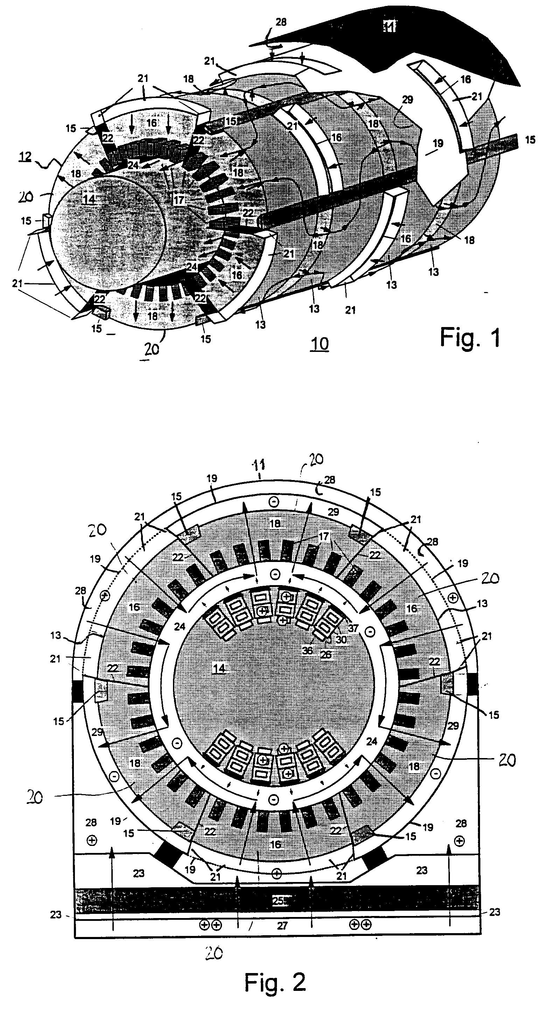

In Fig. 1 ist eine elektrische Maschine 10 mit einem Stator 12 und mit einem Rotor 14, einem teilweise dargestellten Gehäuse 11, einem Teil einer mit Durchbrüchen versehenen, zylindrischen Trennwand 19, sowie mit Zuströmkanälen 16 und mit Abströmkanälen 18 in Schrägansicht dargestellt, um die vorgesehene Anordnung der Zuströmkanäle 16 und der Abströmkanäle 18 zu verdeutlichen, sowie deren Anschluß an die Zuströmkammer 28 und die Abströmkammer 29.

Dabei ist der Stator 12 in vier ringförmige Blechpakete 13 unterteilt, die durch Tragebalken 15 miteinander starr verbunden sind. Die Leiterstäbe 17 des Stators 12 liegen in Nuten an der Innenseite der Blechpakete 13. Zwischen den Blechpaketen 13 befindliche Zwischenräume sind mit strömungsdichten Schottwänden 22 in jeweils sechs Sektoren 20 unterteilt, die als Zuströmkanäle 16 oder Abströmkanäle 18 dienen. Die sich axial erstreckenden Schottwände 22 reichen radial bis zu einem Ringspalt 24, der in an sich bekannter Weise zwischen dem Stator 12 und dem Rotor 14 besteht und als weiterer Strömungskanal für Kühlgas, vorzugsweise Luft genutzt wird. Zur Vereinfachung ist der Rotor 14 in Fig. 1 nur als Zylinder dargestellt.

Wie in Verbindung mit dem in Fig. 2 dargestellten Querschnitt der Maschine gemäß Fig. 1 hervorgeht, sind die Zuströmkanäle 16 über strömungsdichte Verbindungsrahmen 21, die durch die zylindrische Trennwand 19 ragen, an die Zuströmkammer 28 angeschlossen, die ihrerseits von der Trennwand 19 und dem Gehäuse 11 abgegrenzt wird. In der Zuströmkammer herrscht ein Überdruck, was mit "+" gekennzeichnet ist. Die Abströmkanäle 18 münden in die Abströmkammer 29, welche von der Oberfläche der ringförmigen Blechpakete 13 und der Innenseite der zylindrischen Trennwand 19 begrenzt wird. In der Abströmkammer 29 herrscht bestimmungsgemäß ein Unterdruck, was mit "-" gekennzeichnet ist entsprechend einem ständigen Abzug von Kühlgas. In der Abströmkammer umströmt das Gas die Wände der Verbindungsrahmen 21.

In Fig. 2 sind im Rotor insgesamt zwölf gleichartige Rotornuten 26 dargestellt, die jeweils zwei Hohlleiter 30, eine Subnut 36, in der kein Leiter liegt, und einen Keil 37 enthalten.

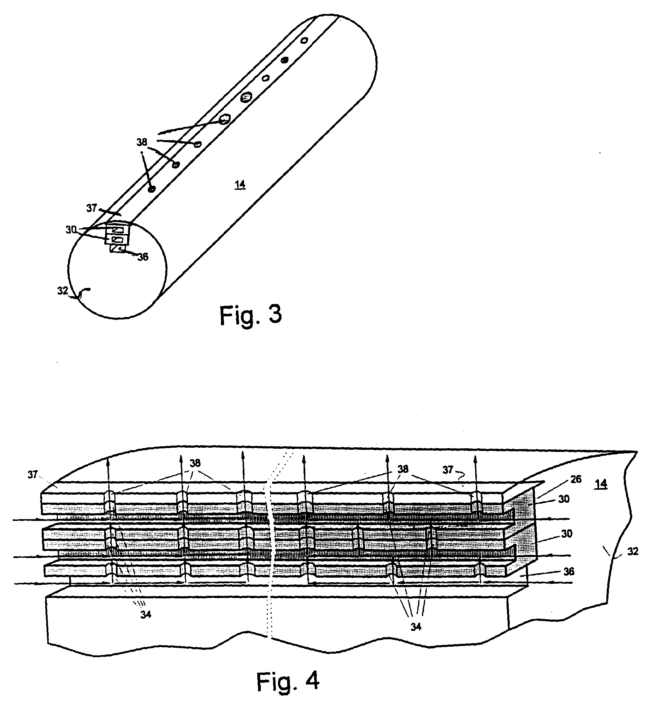

In Fig. 3 ist ergänzend in unmaßstäblicher Schrägansicht ein für die erfindungsgemäße elektrische Maschine 10 vorgesehener Rotor 14 mit nur einer Rotornut 26 dargestellt, in welche Nut 26 zwei zu der nicht weiter dargestellten Rotorwicklung gehörige Hohlleiter 30 eingelegt sind. Aus Gründen der besseren Übersichtlichkeit und der besseren Erkennbarkeit wegen ist nur eine einzige Nut 26 dargestellt, obwohl tatsächlich der Rotor 14 mit vielen dicht nebeneinander angeordneten Nuten ähnlich Fig. 2 gefertigt wird.

Die Hohlleiter 30 und die Subnuten 36 werden von den Stirnseiten des Rotors 14 aus mit Überdruck beaufschlagt. Nachdem das Kühlgas die Subnuten 36 und die Hohlleiter durchströmt hat, tritt es durch Ausnehmungen 38 in den Keilen 37 in den Ringspalt 24 aus, der seinerseits zur Abfuhr des erwärmten Gases unter Unterdruck steht.

Das aus den Abströmkanälen 18 und aus dem Ringspalt 24 kommende Kühlgas wird von einem in Fig. 1 und Fig. 2 nicht dargestellten Ventilator und einem ebenfalls nicht dargestellten Kanal in den Bodenraum 27 befördert, von wo es nach Durchströmen eines Kühlers 25 in die vom Gehäuse 20 und der zylindrischen Trennwand 19 gebildeten Zuströmkammer 28 gelangt.

Der in Fig. 3 gezeigte erfindungsgemäße Rotor 14 weist radial unterhalb der Hohlleiter 30 eine sogenannte Subnut 36 ohne Leiter auf, die dazu dient, unter Druck eingeblasenes Kühlgas bevorzugt in den mittleren Bereich des Rotors 14 zu leiten, wo es dann über weitere in radial darüber befindlichen Leiterstäben 30 vorgesehene radiale Ausnehmungen 34 durch Ausnehmungen in den Keilen 37 nach außen in Richtung zum Ringspalt 24 abströmt, wobei das Kühlgas beim Durchströmen der Leiterstäbe 30 die abzuführende Wärme aufnimmt und nach außen befördert. Um die gewünschte Kühlwirkung und damit eine Vergleichmäßigung des Temperaturprofils über der Rotorlänge besser zu erreichen, können die Querschnitte der im mittleren Bereich angeordneten Ausnehmungen 34 größer als die Querschnitte der stirnseitennah angeordneten Ausnehmungen 34 ausgeführt werden.

In Fig. 4 ist ein schematischer Längsschnitt der zuvor beschriebenen Ausgestaltung einer Rotornut 26 mit Subnut 36 wiedergegeben, wobei der Strömungsverlauf des Kühlgases mit Hilfe kleiner Pfeile angedeutet ist. Hieraus ist ersichtlich, daß das zur Kühlung des Rotors 14 zugeführte Kühlgas axial sowohl in die axialen Hohlräume der Hohlleiter 30 als auch in die darunter befindliche Subnut 36 einströmt.

Im linken Teil von Fig. 4 ist gezeigt, wie das Kühlgas sukzessive über die Ausnehmungen 34 und 38, welche radial übereinander angeordnet sind, radial nach außen den Rotor 14 verläßt. Die übereinander angeordneten Ausnehmungen bilden jeweils einen Kamin zur Unterstützung des Volumenstroms.

Entsprechend der auf der rechten Hälfte des in Fig. 4 gezeigten Rotors 14 dargestellten Ausgestaltung der Ausnehmungen 34 der Leiter 30 sind die Ausnehmungen eines jeden Leiters 30 zwischen Ober- und Unterseite versetzt. Dadurch wird erreicht, daß die von der Subnut her zugemischte Kaltluft erst nach Durchströmen je eines Abschnitts in axialer Richtung in einem jeden der Hohlleiter 30 an die Rotoroberfläche gelangt. Zusammen mit den Ausnehmungen in den Keilen 38 ergeben sich treppenförmige Kamine. Die zahlreichen Umlenkungen verwirbeln das Kühlgas, was den Wärmeübergang zwischen den Hohlleitern 30 und dem Kühlgas verbessert.

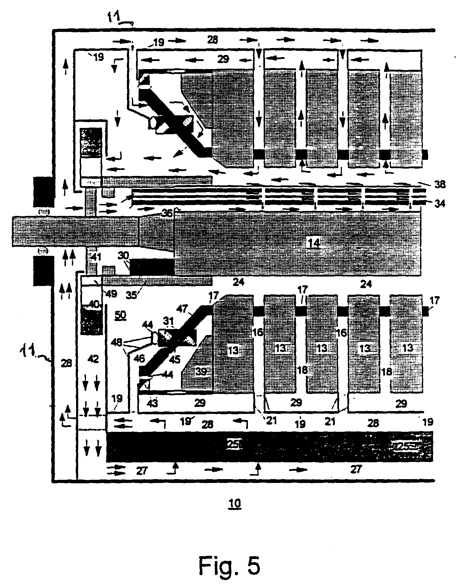

Die in Fig. 5 gezeigte Darstellung gibt einen Teil-Längsschnitt durch eine erfindungsgemäße Maschine 10 wieder und insbesondere den Verlauf des aufgrund der erfindungsgemäßen Ausgestaltung bedingten Kühlgasstroms. Hierbei ist erkennbar, daß das ausströmende Kühlgas jeweils zu den Stirnseiten 32 des Rotors 14 geleitet wird, wo es, wie aus dem Teilschnitt in Fig. 7 hervorgeht, radial abströmt.

**Patentansprüche**

1. Elektrische Maschine (10) mit einem Gehäuse (11), mit einem Stator (12) und einem Rotor (14), mit einer Statorwicklung und mit einer Rotorwicklung, die jeweils aus Leiterstäben (30) gebildet sind, mit einem zwischen dem Stator (12) und dem Rotor (14) befindlichen Ringspalt (24), welcher Stator (12) aus Blechpaketen mit an seiner dem Ringspalt (24) zugewandten Oberfläche eingeformten Statornuten für jeweils wenigstens einen der Statorwicklung zugehörigen Leiterstab (30) und mit radial angeordneten Zwischenräumen gebildet ist, die für die Statorwicklung als Kühlkanäle dienen und von denen jeweils eine Anzahl in axialer Richtung zu Kühlkammern zusammengefaßt sind, durch welche ein Kühlgas, vorzugsweise Luft, aus einer Zuströmkammer (28) zum Ringspalt (24) und umgekehrt von dem Ringspalt (24) zu einer Abströmkammer (29) hindurchströmt, welche Zuströmkammer (28) und Abströmkammer (29), die strömungsmäßig durch Zwischenwände gegeneinander abgegrenzt und axial alternierend am Umfang des Stators angeordnet sind, dadurch gekennzeichnet, daß in an sich bekannter Weise die der Rotorwicklung zugehörigen Leiterstäbe (30), die in am Umfang des Rotors (14) eingeformte Längsnuten (26) eingelegt sind, als Hohlleiter ausgebildet sind, die durch ein von den Stirnseiten (32) des Rotor (14) zuströmendes Kühlgas, vorzugsweise Luft, beaufschlagt sind, daß die Leiterstäbe (30) zumindest auf einer ihrer beiden Radialflächen mit radialen Ausnehmungen (34, 38) versehen sind, durch welche das den Hohlleitern (30) zugeführte Kühlgas in radialer Richtung hindurchtritt, daß jeweils radial innenliegend, unterhalb jeder zur Aufnahme der Leiterstäbe (30) vorgesehenen Längsnut (26) eine Subnut (36) zusätzlich vorgesehen ist, durch welche zusätzliches Kühlgas zur Kühlung der Rotorleiterstäbe (30) zuführbar ist, daß die Länge der Subnuten (36) jeweils höchstens ein Drittel der Rotorlänge beträgt und daß am Ende jeder Subnut (36) das zugeführte Kühlgas radial nach außen zu den zugeordneten Leiterstäben (30) abströmt und deren Wärme aufnimmt.

2. Elektrische Maschine nach Anspruch 1, dadurch gekennzeichnet, daß die von den Rotorstirnseiten mit Kühlgas beaufschlagten Hohlräume der als Hohlleiter (30) ausgebildeten Leiterstäbe im Bereich des Nutendes jeder Subnut (36) eine Strömungssperre (40) für das den Hohlräumen (30) der Leiterstäbe (30) zugeführte Kühlgas aufweisen und daß die an die Strömungssperre (40) angrenzenden Hohlräume (30) der Leiterstäbe (28) von dem durch die Subnuten (36) über die Ausnehmungen (38) zugeführten Kühlgas durchströmt sind.

3. Elektrische Maschine nach einem der vorherigen Ansprüche, dadurch gekennzeichnet, daß der Rotor (14) radial unterhalb der Leiternuten (26) mit Subnuten (36) versehen ist.

4. Elektrische Maschine nach einem der vorherigen Ansprüche, dadurch gekennzeichnet, daß die radialen Ausnehmungen (34, 38) jeweils den gesamten Leiterstab durchgreifen.

5. Elektrische Maschine nach Anspruch 4, dadurch gekennzeichnet, daß die radialen Ausnehmungen (34, 38) jeweils eine Außenwand des Leiterstabes (30) durchgreifen und zueinander axial versetzt sind.

6. Elektrische Maschine nach einem der vorherigen Ansprüche, dadurch gekennzeichnet, daß das aus dem Rotor (14) austretende erwärmte Kühlgas über den Ringspalt (24) abströmt.

7. Elektrische Maschine nach einem der vorherigen Ansprüche, dadurch gekennzeichnet, daß der sich drehende Rotor (14) in bezug auf die radialen Ausnehmungen (34, 38) in den Leiterstäben (30) ein Druckgefälle erzeugt und hierdurch den die Leiterstäbe (30) durchströmenden Volumenstrom an Kühlgas unterstützt.

8. Elektrische Maschine nach einem der vorherigen Ansprüche, dadurch gekennzeichnet, daß die Querschnitte der radialen Ausnehmungen (34, 38) von den Stirnseiten (32) des Rotors (14) axial zur Mitte hin größer sind.

9. Elektrische Maschine nach einem der vorherigen Ansprüche, dadurch gekennzeichnet, daß der Rotor (14) anstelle von Subnuten (36) eine Zentralbohrung aufweist, durch welche Kühlgas zuführbar ist, das über entsprechende Radialbohrungen den Leiterstäben (30) zuströmt und diese kühlt.

Fig. 1

Fig. 2

Fig. 3

Fig. 4

Fig. 5